(19) Europäisches Patentamt
European Patent Office
Office européen des brevets

(11) **EP 2 909 540 B1**

(12) **EUROPEAN PATENT SPECIFICATION**

(45) Date of publication and mention
of the grant of the patent:
**29.11.2017 Bulletin 2017/48**

(21) Application number: **13836491.4**

(22) Date of filing: **17.09.2013**

(51) Int Cl.:
*F24F 11/04* *(2006.01)*   *F24F 3/044* *(2006.01)*
*F24F 7/06* *(2006.01)*   *F24F 11/00* *(2006.01)*
*F24F 13/06* *(2006.01)*   *F24F 11/053* *(2006.01)*

(86) International application number:
**PCT/SE2013/051085**

(87) International publication number:
**WO 2014/042588 (20.03.2014 Gazette 2014/12)**

(54) **VENTILATION DEVICE COMPRISING A FIRST OUTLET AND A SECOND OUTLET**

BELÜFTUNGSVORRICHTUNG MIT EINEM ERSTEN UND EINEM ZWEITEN AUSLASS

DISPOSITIF DE VENTILATION COMPRENANT UNE PREMIÈRE SORTIE ET UNE SECONDE SORTIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2012 SE 1251036**

(43) Date of publication of application:
**26.08.2015 Bulletin 2015/35**

(73) Proprietor: **Swegon Operations AB**
**535 23 Kvänum (SE)**

(72) Inventors:
• **LARSSON, Per-Åke**
**S-686 95 Västra Ämtervik (SE)**
• **SÖDERBERG, Tomas**
**S-671 42 Arvika (SE)**

(74) Representative: **Bergquist, Kjell Gunnar**
**Westpatent AB**
**Almekärrsvägen 11**
**443 39 Lerum (SE)**

(56) References cited:
EP-A2- 1 843 106    US-A- 2 609 743
US-A- 3 194 304    US-A- 3 680 776
US-A- 3 935 898    US-A- 3 967 780
US-A- 4 013 118    US-A- 4 489 881
US-A- 4 928 750    US-B1- 6 296 193

## Description

### TECHNICAL FIELD

The present invention relates to a ventilation device comprising a first air duct for air supply and a second air duct for air supply. The first air duct comprises a first outlet for air flow and the second air duct comprises a second outlet for air flow. The first outlet is arranged to admit passage for a predefined amount of air per time unit.

The present invention also relates to a method for controlling air supply via a first outlet for air flow and a second outlet for air flow, where the first outlet admits passage for a predefined amount of air per time unit.

### BACKGROUND

During ventilation fresh air is in many cases supplied via supply air diffusors, it may be one or more that are connected to a main pipe, where supplied fresh air is brought into motion towards the supply air diffusors via the main pipe by means of a fan arrangement. It is sometimes desirable to control the flow of supplied air in dependence of the present need. For example, a conference room may sometimes be empty, and sometimes be more or less occupied, such that different needs of air supply arise.

For example, one or more detectors for temperature or motions may supply information regarding the present need of air supply to a control unit that in turn may control the fan arrangement in accordance with this need. Control according to requirements for ventilation devices with a continuous ventilation flow does, however, require advanced technology to measure and to control. It may be problematic to optimize a ventilation product for both large and small flows; small flows are often difficult to measure. Patent document US 4489881 discloses an exemplary ventilation device according to the preamble of claim 1. There is therefore a desire for a ventilation device that is demand controlled, and which lacks the above disadvantages.

### DISCLOSURE OF THE INVENTION

The object of the present invention is to provide a ventilation device that is demand controlled, and which is of a less complicated nature than those that have been used until present.

Said object is achieved by means of a ventilation device according to claim 1. Said object is also achieved by means of a method for controlling air supply according to claim 5. Other examples are apparent from the dependent claims.

A number of advantages are obtained by means of the present invention, for example:

- The ventilation device better optimized for the flow which among other things relates to bring along recirculated air in a more controlled manner as well as for lowering or avoiding noise or jarring ate certain flow velocitites.
- Few movable parts.
- Uncomplicated software control, easily adjustable.
- Increased life span.
- Energy efficient.

### BRIEF DESCRIPTION OF THE DRAWINGS

The present invention will now be described more in detail with reference to the appended drawings, where:

Figure 1    shows a schematic overview of a ventilation device;
Figure 2    shows a first graph for air flow versus time;
Figure 3    shows a second graph for air flow versus time;
Figure 4    shows a third graph for air flow versus time;
Figure 5    shows a fourth graph for air flow versus time;
Figure 6    shows a fifth graph for air flow versus time;
Figure 7    shows a sixth graph for air flow versus time; and
Figure 8    shows a flow chart for a method according to the present invention.

### DETAILED DESCRIPTION

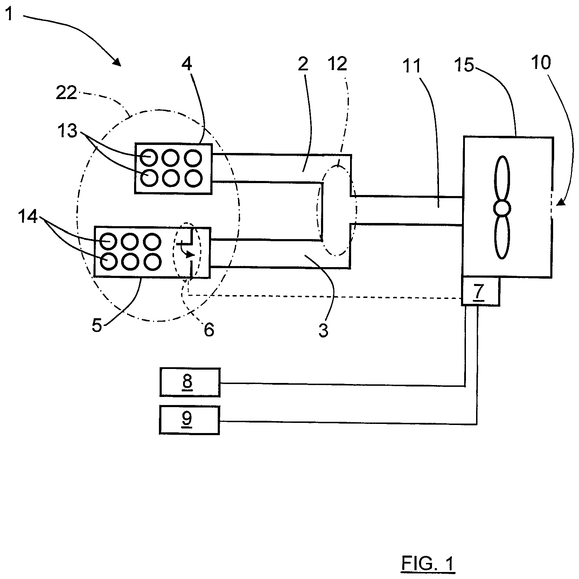

Figure 1 shows a ventilation device 1 that comprises a fan arrangement 15 arranged to bring fresh air into motion, from an inlet 10 to a main duct 11, and further from the main duct 11 to a first air duct 2 and a second air duct 3 via a ramification 12. The first air duct 2 comprises a first outlet 4 for air flow and the second air duct 3 comprises a second outlet 5 for air flow, where each outlet 4, 5 comprises a plurality of outlet apertures 13, 14.

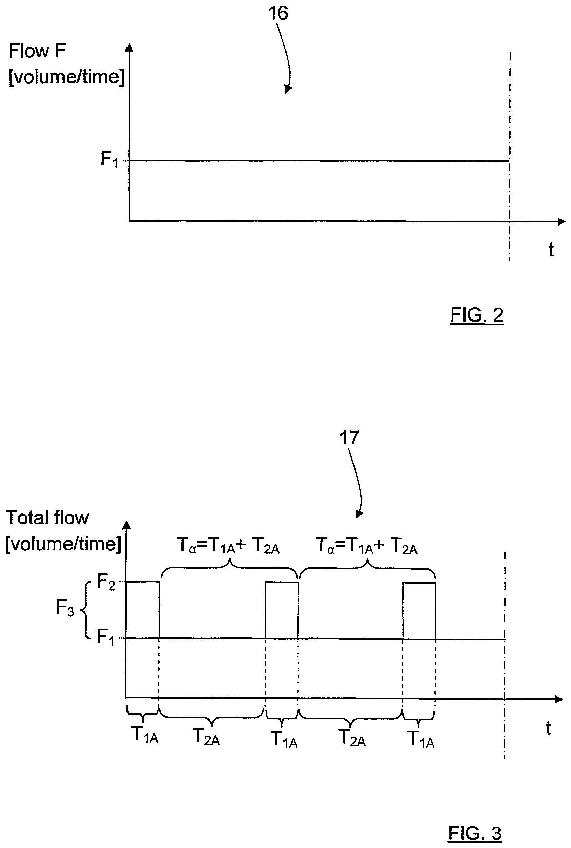

With reference also to Figure 2, showing a first graph 16 for air flow versus time, the first outlet 4 is arranged to admit passage for a predefined amount of air per time unit $F_1$.

According to the present invention the second outlet 5 comprises a controllable choke device 6 that is arranged to either take a first position that admits passage for a predefined amount of air per time unit $F_3$ or a second position that does not admit passage of air, where the first graph 16 shows a state where the choke device has taken the second position.

The ventilation device comprises a control unit 7, a first detector 8 and a second detector 9, where the control unit 7 is arranged to control the controllable choke device 6 in dependence of input data from these detectors 8, 9 such that demand controlled ventilation is obtained. By way of example, each detector 8, 9 is arranged to detect at least one of temperature, air humidity, motions, presence and air quality, such as carbon dioxide content. The detectors are thus of an adapted kind, for example a detector that is arranged to detect motions and/or presence in a previously known manner may comprise a sensor for infrared radiation. It is also conceivable that more sophisticated detectors are used, for example camera arrangements that are adapted to detect the number of persons in a room. At least indirectly, all detected parameters are related to air quality, since for example a temperature rise, an elevated air humidity, motions and presence indicate the presence of one or more persons which is directly related to air quality.

For example, when the detectors 8, 9 detect that a room is empty, and that no extra ventilation is needed for another reason than presence of persons such as for example elevated air humidity or temperature, the choke device 6 is controlled to take the second position, which is illustrated in Figure 2. Then a desired base ventilation is obtained in order to acquire a certain indoor climate.

With reference to Figure 1 and Figure 3, a second graph for air flow versus time is shown in Figure 3 when the detectors 8, 9 have detected that persons have entered a room. This may for example be made by means of detection of movements and/or presence, an/or also indirectly by detecting an elevated carbon dioxide content, which in turn indicates a deteriorated air quality. Then the choke device 6 is controlled by the control device 7 to shift between the first position and the second position with a periodicity $T_{\alpha}$ such that the first position is taken during a first period of time $T_{1A}$ and the second position is taken during a second period of time $T_{2A}$ such that a pulsating air flow is obtained at the second outlet 5. The period $T_{\alpha}$ of this periodicity corresponds to the sum of the first period of time $T_{1A}$ and the second period of time $T_{2A}$, that is $T_{\alpha} = T_{1A} + T_{2A}$. The total maximum flow per time unit $F_2$ is obtained when the second position is taken and corresponds to the sum of the flows $F_1$, $F_3$ via the outlets 4, 5.

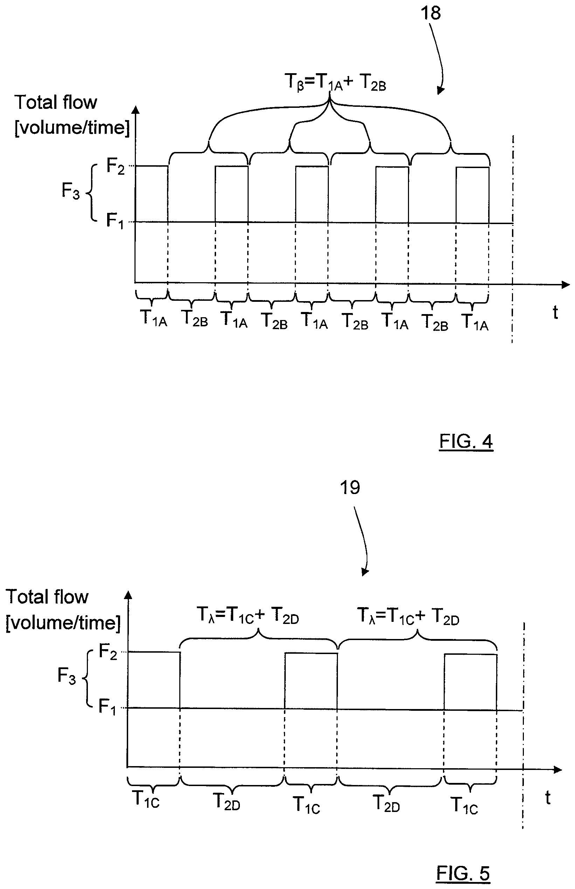

According to a first example, with reference also to Figure 4 that shows a fourth graph for airflow versus time, if the detectors 8, 9 have detected that more air supply is needed, for example due to the fact that more persons are detected in the room and/or that the carbon dioxide content has been elevated, the choke device 6 is controlled by the control unit 7 such that the first period of time $T_{1A}$ is maintained constant while the second period of time is decreased from a first value $T_{2A}$ to a second value $T_{2B}$ such that the period of the periodicity is decreased from a first period value $T_{\alpha}$ to a second period value $T_{\beta}$. In this way, the time during which the choke device 6 is controlled to take the first position is increased, resulting in an increased air flow.

In this example, the first position is generally taken during constant periods of time $T_{1A}$ and the second position during controllably variable periods of time $T_{2A}$, $T_{2B}$, such that a controllable periodicity $T_{\alpha}$, $T_{\beta}$ for the first position is obtained. In this way, only the time interval $T_{2A}$, $T_{2B}$ when the second position is taken is changed, that is when no air passage is admitted at the second outlet 5, but no other parameters.

According to a second example, with reference to Figure 1, Figure 3 and Figure 5, where Figure 5 shows a fourth graph 19 for airflow versus time, if the detectors 8, 9 detect that more sir supply is needed, the control unit 7 is instead arranged to control the choke device 6 such that the first period of time is increased from a first value $T_{1A}$ to a second value $T_{1C}$ while the second period of time is correspondingly decreased from a first value $T_{2A}$ to a second value $T_{2C}$. In this way, the time during which the choke device 6 is controlled to take the first position is increased, resulting in an increased air flow.

Generally, the first position is taken during controllably variable periods of time $T_{1A}$, $T_{1C}$ with a constant periodicity $T_{\alpha}$.

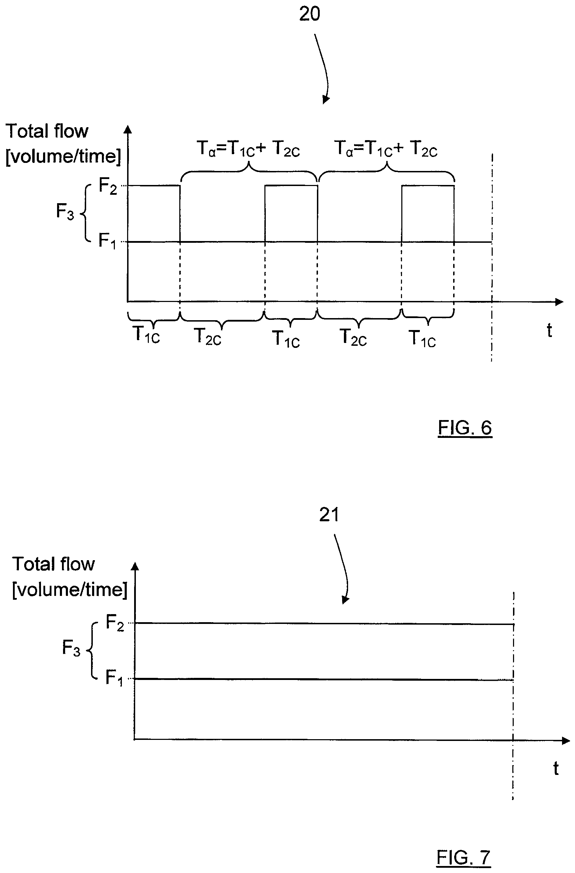

According to a third example, with reference also to Figure 6, where Figure 6 shows a fifth graph 20 for airflow versus time, both the first period of time has been changed from a first value $T_{1A}$ to a second value $T_{1C}$ and the second period of time has been changed from a first value $T_{2A}$ to a second value $T_{2C}$. Then the period of the periodicity has been changed from a first value $T_{\alpha}$ to a second value $T_{\lambda}$.

According to the third example, the first period of time can either be increased or decreased, and the second period of time can also either be increased or decreased, independently of each other.

All kinds of changes of pulse widths or pulse lengths in all conceivable combinations may occur according to the present invention. Naturally, where appropriate, the choke device 6 may be controlled to take the first position during a longer time, which is indicated in Figure 7, shows a sixth graph 21 for airflow versus time.

Suitably, the periods are controlled such that too long or too short time intervals are avoided, for example the device may be controlled such that intervals shorter than 1 minute or longer than 10 minutes are avoided except in those cases where the control provides a signal indicating that it should be completely open or completely closed.

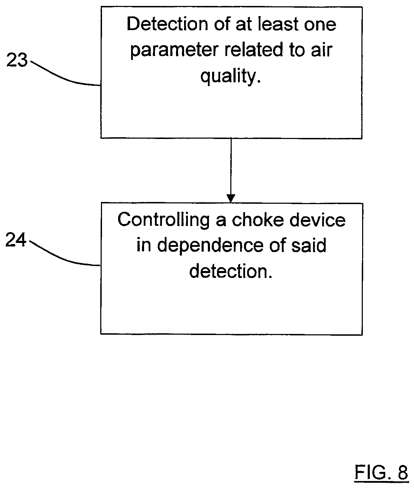

With reference to Figure 8, the present invention also relates to a method for controlling air supply via a first outlet 4 for air flow and a second outlet 5 for air flow, where the first outlet 4 admits passage for a predefined amount of air per time unit $F_1$.

The method comprises the steps:

23: detecting at least one parameter in a space, where said parameter is related to the air quality in the space; and
24: controlling a choke device 6 at the second outlet 5 in dependence of said detection such that the choke device 6 either takes a first position that admits passage for a predefined amount of air per time unit $F_3$, or a second position that does not admit passage of air. In this way, demand controlled ventilation is obtained.

The present invention is not limited to the above, but may vary freely within the scope of the appended claims. For example, the first outlet and the second outlet form an outlet pair 22, and it is conceivable that the main duct comprises more ramifications that lead to further outlet pairs of the same type. Such outlet pairs may be present in the same room or different rooms, and in the latter case it is desirable to have detectors in all current rooms. A number of outlet pairs may also be integrated as one and the same supply air diffusor, for example in the form of a so-called cooling baffle.

The number of detectors in each room, and their different types and functions may vary, but according to the present invention there shall be at least one detector.

Fan arrangements, air ducts and chokes are of a well-known kind, and are not further described here.

When it is stated that no air passage is admitted, this should be interpreted as being within what is practically obtainable in this field of technology; a certain amount of leakage may therefore occur. Furthermore, the air flows are graphically shown with sharp borders; practically there are softer transitions between different positions where the different air flows may vary somewhat over time due to leakage, wear, clogging of filters and other sources of error. The graphical representations should therefore be regarded as schematical description of the present invention, and not as exact representations of reality.

At a ventilation device of this kind, a constant pressure in the air ducts is desired. By also having knowledge about the characteristics of the outlets 4, 5 with adherent outlet apertures 13, 14 one may obtain information regarding which flow that currently passes the outlets 4, 5. With characteristics a so-called k factor is referred to, which together with the duct pressure provides the passed flow Q in liters per second according to the formula:

$$Q = k\sqrt{dP}$$

where dP is the pressure difference between duct and surroundings.

When the duct pressure is varied, a software-implemented compensation of the flow may then be performed by changing the length of the periods. By means of this knowledge of the characteristics of the outlets and the current duct pressure, flow measurement with special sensors may be avoided.

The control unit 7 is arranged to control the controllable choke device 6 in dependence of input data from said detector 8, 9, and it is also conceivable that time control may be used as a complement. For example, knowledge about that a room is going to be used at a certain time may be used to increase the ventilation a certain time period before that time. In this case, the time control works as a kind of indirect presence detection, and thus the unit that regulates the time control can be regarded as a kind of detector within the scope of the present invention as disclosed by the appenden claims. The detected parameter in that case is time.

## Claims

1. A ventilation device (1) comprising a first air duct (2) for air supply and a second air duct (3) for air supply, where the first air duct (2) comprises a first outlet (4) for air flow and the second air duct (3) comprises a second outlet (5) for air flow, where the first outlet (4) is arranged to admit passage for a predefined amount of air per time unit ($F_1$), where the second outlet (5) comprises a controllable choke device (6) that is arranged to either take a first position that admits passage for a predefined amount of air per time unit ($F_3$) or a second position that does not admit passage of air, where the ventilation device (1) comprises a control unit (7) and at least one detector (8, 9), where the control unit (7) is arranged to control the controllable choke device (6) in dependence of input data from said detector (8, 9) such that demand controlled ventilation is obtained, **characterized in that** the control unit (7) is arranged to control the choke device (6) to shift between the first position and the second position with a periodicity ($T_\alpha$, $T_\beta$, $T_\lambda$) such that the first position is taken during a first period of time ($T_{1A}$, $T_{1C}$) and the second position is taken during a second period of time ($T_{2A}$, $T_{2B}$, $T_{2C}$, $T_{2D}$), such that a pulsating air flow is acquired at the second outlet (5).

2. A ventilation device according to claim 1, **characterized in that** each detector (8, 9) is arranged to detect at least one of temperature, air humidity, carbon dioxide content, motions and presence.

3. A ventilation device according to any one of the claims 1 or 2, **characterized in that** the control unit (7) is arranged to control the choke device (6) such that the first period of time ($T_{1A}$) is constant while the second period of time ($T_{2A}$, $T_{2B}$) is controllably variable, such that the first position is taken during constant periods of time ($T_{1A}$) with a controllably variable periodicity ($T_\alpha$, $T_\beta$).

4. A ventilation device according to any one of the claims 1 or 2, **characterized in that** the control unit (7) is arranged to control the choke device (6) such that the first period of time ($T_{1A}$, $T_{1C}$) is controllably variable such that the first position is taken during controllably variable periods of time ($T_{1A}$, $T_{1C}$) with a constant periodicity ($T_\alpha$).

5. A method for controlling air supply via a first outlet (4) for air flow and a second outlet (5) for air flow, where the first outlet (4) admits passage for a predefined amount of air per time unit ($F_1$), **characterized in that** the method comprises the steps:

(23) detecting at least one parameter in a space, where said parameter is related to the air quality in the space; and

(24) controlling a choke device (6) at the second outlet (5) in dependence of said detection such that the choke device (6) either takes a first position that admits passage for a predefined amount of air per time unit ($F_3$), or a second position that does not admit passage of air such that a demand controlled ventilation is obtained, where the control of the choke device (6) results in a shift between the first position and the second position with a periodicity ($T_\alpha$, $T_\beta$, $T_\lambda$), such that the first position is taken during a first period of time ($T_{1A}$, $T_{1C}$) and the second position is taken during a second period of time ($T_{2A}$, $T_{2B}$, $T_{2C}$, $T_{2D}$), such that a pulsating air flow is acquired at the second outlet (5).

**6.** A method according to claim 5, **characterized in that** said detection refers to at least one of temperature, air humidity, carbon dioxide content, motions and presence.

**7.** A method according to any one of the claims 5 or 6, **characterized in that** the control of the choke device (6) results **in that** the first period of time ($T_{1A}$) is constant while the second period of time ($T_{2A}$, $T_{2B}$) is controllably variable, such that the first position is taken during constant periods of time ($T_{1A}$) with a controllably variable periodicity ($T_\alpha$, $T_\beta$).

**8.** A method according to any one of the claims 5 or 6, **characterized in that** the control of the choke device (6) results **in that** the first period of time ($T_{1A}$, $T_{1C}$) is controllably variable such that the first position is taken during controllably variable periods of time ($T_{1A}$, $T_{1C}$) with a constant periodicity ($T_\alpha$).

**Patentansprüche**

**1.** Belüftungsvorrichtung (1), umfassend eine erste Luftleitung (2) zur Luftzufuhr und eine zweite Luftleitung (3) zur Luftzufuhr, wobei die erste Luftleitung (2) einen ersten Auslass (4) für eine Luftströmung umfasst und die zweite Luftleitung (3) einen zweiten Auslass (5) für eine Luftströmung umfasst, wobei der erste Auslass (4) ausgelegt ist, einen Durchlass für eine vorbestimmte Luftmenge pro Zeiteinheit ($F_1$) zuzulassen, wobei der zweite Auslass (5) eine steuerbare Drosselvorrichtung (6) umfasst, welche ausgelegt ist, entweder eine erste Position, welche einen Durchlass für eine vorbestimmte Luftmenge pro

Zeiteinheit ($F_3$) zulässt, oder eine zweite Position einzunehmen, welche einen Durchlass von Luft nicht zulässt, wobei die Belüftungsvorrichtung (1) eine Steuereinheit (7) und mindestens einen Detektor (8, 9) umfasst, wobei die Steuereinheit (7) ausgelegt ist, die steuerbare Drosselvorrichtung (6) in Abhängigkeit von Eingangsdaten von dem Detektor (8, 9) derart zu steuern, dass eine bedarfsgesteuerte Belüftung erhalten wird, **dadurch gekennzeichnet, dass** die Steuereinheit (7) ausgelegt ist, die Drosselvorrichtung (6) zu steuern, zwischen der ersten Position und der zweiten Position mit einer Periodizität ($T_\alpha$, $T_\beta$, $T_\lambda$) derart umzuschalten, dass die erste Position während einer ersten Zeitperiode ($T_{1A}$, $T_{1C}$) eingenommen wird und die zweite Position während einer zweiten Zeitperiode ($T_{2A}$, $T_{2B}$, $T_{2C}$, $T_{2D}$) eingenommen wird, derart, dass eine pulsierende Luftströmung an dem zweiten Auslass (5) erhalten wird.

**2.** Belüftungsvorrichtung nach Anspruch 1, **dadurch gekennzeichnet, dass** jeder Detektor (8, 9) ausgelegt ist, mindestens eines von Folgendem zu erfassen: Temperatur, Luftfeuchtigkeit, Kohlendioxidgehalt, Bewegungen und Anwesenheit.

**3.** Belüftungsvorrichtung nach einem der Ansprüche 1 oder 2, **dadurch gekennzeichnet, dass** die Steuereinheit (7) ausgelegt ist, die Drosselvorrichtung (6) derart zu steuern, dass die erste Zeitperiode ($T_{1A}$) konstant ist, während die zweite Zeitperiode ($T_{2A}$, $T_{2B}$) steuerbar variabel ist, derart, dass die erste Position während konstanter Zeitperioden ($T_{1A}$) mit einer steuerbar variablen Periodizität ($T_\alpha$, $T_\beta$) eingenommen wird.

**4.** Belüftungsvorrichtung nach einem der Ansprüche 1 oder 2, **dadurch gekennzeichnet, dass** die Steuereinheit (7) ausgelegt ist, die Drosselvorrichtung (6) derart zu steuern, dass die erste Zeitperiode ($T_{1A}$, $T_{1C}$) steuerbar variabel ist, derart, dass die erste Position während steuerbar variabler Zeitperioden ($T_{1A}$, $T_{1C}$) mit einer konstanten Periodizität ($T_\alpha$) eingenommen wird.

**5.** Verfahren zum Steuern einer Luftzufuhr über einen ersten Auslass (4) für eine Luftströmung und einen zweiten Auslass (5) für eine Luftströmung, wobei der erste Auslass (4) einen Durchlass für eine vorbestimmte Luftmenge pro Zeiteinheit ($F_1$) zulässt, **dadurch gekennzeichnet, dass** das Verfahren die Schritte umfasst:

(23) Erfassen von mindestens einem Parameter in einem Raum, wobei der Parameter auf die Luftqualität in dem Raum bezogen ist; und

(24) Steuern einer Drosselvorrichtung (6) an dem zweiten Auslass (5) in Abhängigkeit von der Erfassung, derart, dass die Drosselvorrichtung (6) entweder eine erste Position, welche einen Durchlass für eine vorbestimmte Luftmenge pro Zeiteinheit ($F_3$) zulässt, oder eine zweite Position einnimmt, welche einen Durchlass von Luft nicht zulässt, derart, dass eine bedarfsgesteuerte Belüftung erhalten wird, wobei die Steuerung der Drosselvorrichtung (6) zu einem Umschalten zwischen der ersten Position und der zweiten Position mit einer Periodizität ($T_\alpha$, $T_\beta$, $T_\lambda$) führt, derart, dass die erste Position während einer ersten Zeitperiode ($T_{1A}$, $T_{1C}$) eingenommen wird und die zweite Position während einer zweiten Zeitperiode ($T_{2A}$, $T_{2B}$, $T_{2C}$, $T_{2D}$) eingenommen wird, derart, dass eine pulsierende Luftströmung an dem zweiten Auslass (5) erhalten wird.

6. Verfahren nach Anspruch 5, **dadurch gekennzeichnet, dass** sich die Erfassung auf mindestens eines von Folgendem bezieht: Temperatur, Luftfeuchtigkeit, Kohlendioxidgehalt, Bewegungen und Anwesenheit.

7. Verfahren nach einem der Ansprüche 5 oder 6, **dadurch gekennzeichnet, dass** die Steuerung der Drosselvorrichtung (6) dazu führt, dass die erste Zeitperiode ($T_{1A}$) konstant ist, während die zweite Zeitperiode ($T_{2A}$, $T_{2B}$) steuerbar variabel ist, derart, dass die erste Position während konstanter Zeitperioden ($T_{1A}$) mit einer steuerbar variablen Periodizität ($T_\alpha$, $T_\beta$) eingenommen wird.

8. Verfahren nach einem der Ansprüche 5 oder 6, **dadurch gekennzeichnet, dass** die Steuerung der Drosselvorrichtung (6) dazu führt, dass die erste Zeitperiode ($T_{1A}$, $T_{1C}$) steuerbar variabel ist, derart, dass die erste Position während steuerbar variabler Zeitperioden ($T_{1A}$, $T_{1C}$) mit einer konstanten Periodizität ($T_\alpha$) eingenommen wird.

**Revendications**

1. Dispositif de ventilation (1) comprenant un premier conduit d'air (2) pour une alimentation en air et un deuxième conduit d'air (3) pour une alimentation en air, le premier conduit d'air (2) comprenant une première sortie (4) pour flux d'air et le deuxième conduit d'air (3) comprenant une deuxième sortie (5) pour flux d'air, la première sortie (4) étant conçue pour laisser passer une quantité prédéfinie ($F_1$) d'air par unité de temps, la deuxième sortie (5) comprenant un dispositif d'étranglement (6) commandable conçu pour prendre soit une première position qui laisse passer une quantité prédéfinie ($F_3$) d'air par unité de temps, soit une deuxième position qui ne laisse pas passer l'air, le dispositif de ventilation (1) comprenant une unité de commande (7) et au moins un détecteur (8, 9), l'unité de commande (7) étant conçue pour commander le dispositif d'étranglement (6) commandable en fonction de données d'entrée provenant dudit détecteur (8, 9) de manière à obtenir une ventilation commandée par la demande, **caractérisé en ce que** l'unité de commande (7) est conçue pour commander le dispositif d'étranglement (6) afin qu'il alterne entre la première et la deuxième position avec une périodicité ($T_\alpha$, $T_\beta$, $T_\lambda$) telle que la première position est prise pendant une première durée ($T_{1A}$, $T_{1C}$) et la deuxième position est prise pendant une deuxième durée ($T_{2A}$, $T_{2B}$, $T_{2C}$, $T_{2D}$), de manière à produire un flux d'air pulsatoire à la deuxième sortie (5).

2. Dispositif de ventilation selon la revendication 1, **caractérisé en ce que** chaque détecteur (8, 9) est conçu pour détecter au moins un paramètre parmi la température, l'humidité de l'air, la teneur en dioxyde de carbone, le mouvement et la présence.

3. Dispositif de ventilation selon l'une quelconque des revendications 1 et 2, **caractérisé en ce que** l'unité de commande (7) est conçue pour commander le dispositif d'étranglement (6) de manière que la première durée ($T_{1A}$) est constante alors que la deuxième durée ($T_{2A}$, $T_{2B}$) est variable et commandée, de manière que la première position est prise pendant des durées ($T_{1A}$) constantes avec une périodicité ($T_\alpha$, $T_\beta$) variable et commandée.

4. Dispositif de ventilation selon l'une quelconque des revendications 1 et 2, **caractérisé en ce que** l'unité de commande (7) est conçue pour commander le dispositif d'étranglement (6) de manière que la première durée ($T_{1A}$, $T_{1C}$) est variable et commandée, de manière que la première position est prise pendant des durées ($T_{1A}$, $T_{1C}$) variables et commandées avec une périodicité ($T_\alpha$) constante.

5. Procédé de commande d'une alimentation en air au moyen d'une première sortie (4) pour flux d'air et d'une deuxième sortie (5) pour flux d'air, la première sortie (4) laissant passer une quantité prédéfinie ($F_1$) d'air par unité de temps, **caractérisé en ce que** le procédé comprend les étapes suivantes :

(23) détection d'au moins un paramètre dans un espace, ledit paramètre étant lié à la qualité de l'air dans ledit espace ; et
(24) commande d'un dispositif d'étranglement (6) à la deuxième sortie (5) en fonction de ladite détection de manière que le dispositif d'étranglement (6) prend soit une première position qui laisser passer une quantité prédéfinie ($F_3$) d'air par unité de temps, soit une deuxième position qui ne laisse pas passer l'air, de manière à obtenir une ventilation commandée par la demande, la commande du dispositif d'étranglement (6) produisant une alternance entre la première et la deuxième position avec une périodicité ($T_\alpha$, $T_\beta$, $T_\lambda$) telle que la première position est prise pendant une première durée ($T_{1A}$, $T_{1C}$) et la deuxième position est prise pendant une deuxième durée ($T_{2A}$, $T_{2B}$, $T_{2C}$, $T_{2D}$), de manière à produire un flux d'air pulsatoire à la deuxième sortie (5).

6. Procédé selon la revendication 5, **caractérisé en ce que** ladite détection concerne au moins un paramètre parmi la température, l'humidité de l'air, la teneur en dioxyde de carbone, le mouvement et la présence.

7. Procédé selon l'une quelconque des revendications 5 et 6, **caractérisé en ce que** la commande du dispositif d'étranglement (6) est telle que la première durée ($T_{1A}$) est constante alors que la deuxième durée ($T_{2A}$, $T_{2B}$) est variable et commandée, de manière que la première position est prise pendant des durées ($T_{1A}$) constantes avec une périodicité ($T_\alpha$, $T_\beta$) variable et commandée.

8. Procédé selon l'une quelconque des revendications 5 et 6, **caractérisé en ce que** la commande du dispositif d'étranglement (6) est telle que la première durée ($T_{1A}$, $T_{1C}$) est variable et commandée, de manière que la première position est prise pendant des durées ($T_{1A}$, $T_{1C}$) variables et commandées avec une périodicité ($T_\alpha$) constante.

FIG. 1

16

Flow F
[volume/time]

$F_1$

t

FIG. 2

17

Total flow
[volume/time]

$T_\alpha = T_{1A} + T_{2A}$    $T_\alpha = T_{1A} + T_{2A}$

$F_2$

$F_3$

$F_1$

$T_{1A}$    $T_{2A}$    $T_{1A}$    $T_{2A}$    $T_{1A}$

t

FIG. 3

18

Total flow
[volume/time]

$T_\beta = T_{1A} + T_{2B}$

$F_2$

$F_3 \{$

$F_1$

$T_{1A}$  $T_{2B}$  $T_{1A}$  $T_{2B}$  $T_{1A}$  $T_{2B}$  $T_{1A}$  $T_{2B}$  $T_{1A}$  $t$

FIG. 4

19

Total flow
[volume/time]

$T_\lambda = T_{1C} + T_{2D}$    $T_\lambda = T_{1C} + T_{2D}$

$F_2$

$F_3 \{$

$F_1$

$T_{1C}$  $T_{2D}$  $T_{1C}$  $T_{2D}$  $T_{1C}$  $t$

FIG. 5

FIG. 6

FIG. 7

23 — Detection of at least one parameter related to air quality.

24 — Controlling a choke device in dependence of said detection.

FIG. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4489881 A